# EUROPÄISCHE PATENTSCHRIFT

(11) **EP 0 646 690 B1**
(45) Veröffentlichungstag und Bekanntmachung des Hinweises auf die Patenterteilung: **27.12.1996**
(21) Anmeldenummer: 94114416.4
(22) Anmeldetag: 14.09.1994
(51) Int. Cl.: E05C 17/32, E05B 15/00

(54) **Stütze zum Halten eines Verschlusselementes**
A stay for holding a closure element
Dispositif d'arrêt pour maintenir un élément de fermeture

(30) Priorität: 02.10.1993 DE 9314977 U
(43) Veröffentlichungstag der Anmeldung: 05.04.1995
(73) Patentinhaber: HUWIL-Werke GmbH Möbelschloss- u. Beschlagfabriken, D-53809 Ruppichteroth (DE)
(72) Erfinder: Hirtsiefer, Artur, D-53819 Neunkirchen-Seelscheid (DE)
(74) Vertreter: Harwardt, Günther

(56) Entgegenhaltungen:
- EP-A- 0 047 826
- EP-A- 0 422 678
- DE-A- 2 016 287
- DE-A- 2 800 985
- DE-C- 192 269
- DE-C- 694 865
- FR-A- 1 222 294
- GB-A- 527 160
- GB-A- 702 781
- US-A- 4 295 245

## Beschreibung

Die Erfindung betrifft eine Stütze zum Halten eines Verschlußelementes, insbesondere einer Klappe oder eines Deckels, im Verhältnis zu einem damit zu verschließenden Behälter in einer Schließstellung oder einer Offenstellung, mit einem ersten und einem zweiten Arm, wobei einer der Arme mit dem Behälter durch ein erstes und der andere Arm mit dem Verschluß durch ein zweites Schwenklager Verbindbar ist und die beiden Arme durch ein drittes Schwenklager miteinander verbunden sind und durch eine zwischen ihnen wirksame Feder in einer der Schließstellung entsprechenden Stellung ihrer Arme, bei der die Schwenklager einander angenähert sind oder in einer der Offenstellung entsprechenden Stellung ihrer Arme, bei der die Schwenklager voneinander entfernt sind, gegeneinander abgestützt sind, wobei die Feder mit einem Ende am ersten Arm und mit ihrem anderen Ende am zweiten Arm exzentrisch zum dritten Schwenklager, das die beiden Arme verbindet, angreift und wobei ferner der Angriffspunkt der Feder am zweiten Arm in der der Offenstellung entsprechenden Stellung der Arme von der Verbindungslinie zwischen dem Mittelpunkt des ersten Schwenklagers am ersten Arm durch das dritte Schwenklager zwischen beiden Armen zu einer Seite und in der Schließstellung zur anderen Seite von der Verbindungslinie versetzt ist.

Eine solche Stütze ist in der DE-PS 192269 beschrieben. Dabei umfaßt die Stütze zwei an einem Ende abgekröpfte Hebel, die an ihrem abgekröpten Ende zur Bildung des dritten Schwenklagers miteinander verbunden sind. Die beiden Arme sind durch eine Zugfeder miteinander verbunden, deren Angriffspunkte exzentrisch zu dem dritten Schwenklager angeordnet sind. Die Feder liegt offen. Einer der beiden Arme ist längenveränderlich ausgebildet, um den Öffnungswinkel zwischen beispielsweise einem Deckel und einem Behälter variabel einstellen zu können.

Der EP 0 047 826 Al ist ein in Offenstellung verrastbarer Türschließer mit zwei Armen entnehmbar, die an einem Ende gelenkig miteinander verbunden sind. Das aus dem Gelenkpunkt gebildete Schwenklager weist einen Gelenkzapfen mit Rastausnehmungen auf, das von einem im anderen Arm verstellbar angeordnetes und durch eine Feder beaufschlagtes Rastelement zum Eingriff beaufschlagt ist. Hierdurch sollen verschiedene Öffnungsstellungen der Tür erzielbar sein. Das Rastelement und die beaufschlagende Feder sind im inneren des zugehörigen Armes aufgenommen, und dieser ist durch eine aufgeschobene Abdeckschiene abgeschlossen, um das Aussehen zu beeinflussen.

Ferner ist in der DE 26 53 106 C2 eine Stütze beschrieben, bei der die beiden Arme der Stütze zueinander mittelbar über eine Feder abgestützt sind. Die Feder beaufschlagt einen Schieber. Der Schieber ist auf einer der Stützen verschiebbar angeordnet und legt sich mit einer an seiner Stirnfläche vorgesehen Stützkontur gegen entsprechende Stützflächen des anderen Armes an. Der Schieber verriegelt die beiden Arme in der der Offen-stellung von Verschluß und Behälter entsprechenden Position der Arme. Ferner dient er zur Sicherung der Arme zueinander in ihrer der Schließposition von Verschluß und Behälter entsprechenden Position zueinander. Ein Nachteil bei dieser Ausbildung ist, daß Selbsthemmung bei ungünstigen Reibungsverhältnisse und somit Blockieren bei Öffnen der Tür eintreten kann. Des weiteren ist von Nachteil, daß die Spritzgußform für den Schieber wegen der äußeren Kontur und der Öffnung für die Stange aufwendig ist.

Der Erfindung liegt die Aufgabe zugrunde, eine Stütze vorzuschlagen, die einfach im Aufbau ist und eine sichere Zuhaltestellung einnimmt und bei der die Zu- und Aufhaltekräfte genau vorbestimmt werden können sowie gewährleistet, daß keine Behinderung der Bewegung durch Einklemmen von im Behälter befindlichen Teilen erfolgen kann.

Diese Aufgabe wird erfindungsgemäß dadurch gelöst, daß der erste Arm als geschlossenes Gehäuse mit einem Hohlraum und mit einer Durchtrittsöffnung für den zweiten Arm ausgebildet ist, daß der zweite Arm in dem Hohlraum im dritten Schwenklager gelagert und im Hohlraum seitlich geführt ist und, daß die Feder als Druckfeder ausgebildet, im Hohlraum aufgenommen und mit ihren Enden an den beiden Armen abgestützt ist.

Von Vorteil bei dieser Ausbildung ist, daß wenige Bauteile für die Stütze erforderlich sind. Die erforderlichen Kräfte für die Schließposition oder Offenposition lassen sich in einfacher Weise durch Austausch der Feder oder Veränderung der Abstützung des zweiten Armes zum ersten Arm über die Feder erzielen und vorbestimmen. Auch die Spritzgießform für das Gehäuse ist einfach im Aufbau und kostengünstig herzustellen. Ein Einklemmen oder eine Behinderung der Funktion durch im Behälter befindliche Teile wird vermieden. Dies ist insbesondere bei einem Dachkoffer für Fahrzeuge von Bedeutung.

Zur Bewegungsbegrenzung der beiden Arme zur Offenstellung hin ist vorgesehen, die Stellung der Arme zueinander durch Anschläge zu begrenzen.

Vorzugsweise ist zur Erzielung der erforderlichen Schließkraft des Verschlusses zum Behälter vorgesehen, daß die Exzentrizität und damit der wirksame Hebelarm der Druckfeder, bezogen auf die Verbindungslinie, in der der Schließstellung entsprechenden Stellung der Arme und die Federcharakteristik der Druckfeder nach der gewünschten Schließkraft ausgelegt sind.

Um die nötige Stützkraft für die Abstützung des Verschlusses im Verhältnis zum Behälter in der Offenposition aufzubringen, ist vorgesehen, daß die Exzentrizität und damit der wirksame Hebelarm der Druckfeder, bezogen auf die Verbindungslinie, in der der Offenstellung entsprechenden Stellung der Arme und die Federcharakteristik der Druckfeder nach der erforderlichen Stützkraft für den Verschluß ausgelegt sind.

Eine besonders günstige Ausgestaltung der Erfindung ergibt sich dadurch, daß das Gehäuse durch einen Deckel verschlossen ist und der zweite Arm zwischen Gehäuse und Deckel seitlich geführt ist.

Zur Führung ist die Druckfeder auf eine Führungsstange aufgesetzt, welche mit einem Lagerhebel verbunden ist. Der Lagerhebel bildet zusammen mit einer Lagerbohrung des zweiten Arms die Abstützung für die Druckfeder am zweiten Arm.

Vorzugsweise sind die Teile als Spritzgußteile aus einem Kunststoff, insbesondere Acetalhomopolymerisat (POM), hergestellt.

Besonders deutlich werden die Vorteile der Stütze nach der Erfindung bei einer Anordnung an einem Behälter mit einem Verschluß, der wahlweise um die eine oder die andere von zwei zueinander parallelen Seitenkanten verschwenkbar ist, wobei das Schwenklager des ersten Arms am Behälter und das Schwenklager des zweiten Arms am Verschluß jeweils mittig zwischen den beiden Seitenkanten am Behälter bzw. Verschluß angelenkt sind. Diese Anordnung und die Ausbildung der Stütze läßt das Öffnen des Deckels von zwei Seiten zu. Eine solche Anordnung ist ebenfalls besonders günstig bei Dachkoffern für Fahrzeuge, um die Zugänglichkeit von der jeweils günstigsten Seite des Fahrzeuges zu erleichtern.

Die Anwendung der erfindungsgemäßen Stütze bezüglich eines Dachkoffers und deren Ausbildung ist aus der Zeichnung näher ersichtlich und anhand derselben erläutert.

Es zeigt
- Figur 1: einen Querschnitt durch einen Dachkoffer in der Schließstellung des als Deckel gestalteten Verschlusses im Verhältnis zu dem Kofferunterteil als Behälter mit Ansicht auf den inneren Aufbau der Stütze,

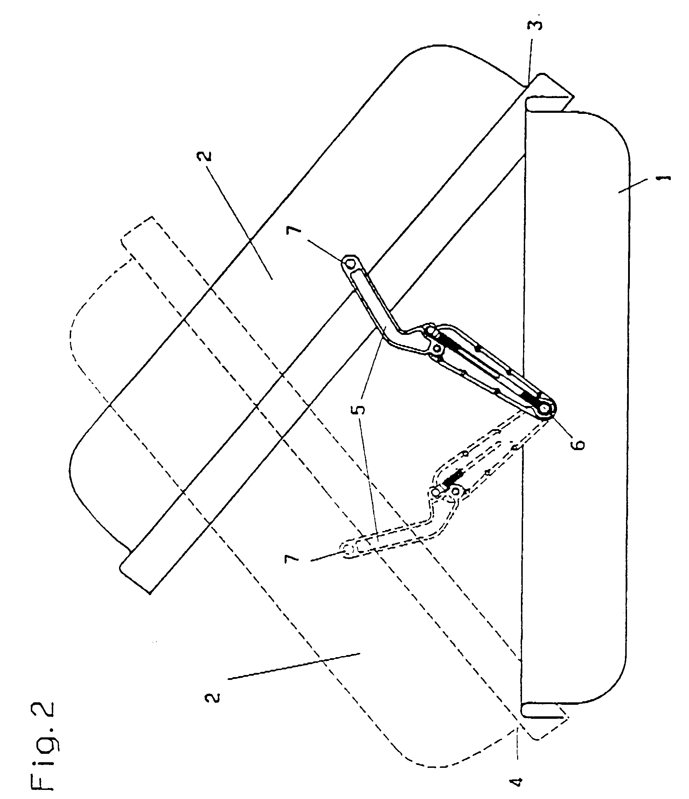

- Figur 2: den Dachkoffer gemäß Figur 1, wobei in ausgezogen Linien der Verschluß in der nach rechts verschwenkten Offenstellung und in gestrichelten Linien der Verschluß in seiner nach links verschwenkten Offenstellung gezeigt ist,
- Figur 3: eine erste Ansicht auf die Stütze bei einer Stellung der Arme zueinander, die der Offenstellung des Verschlusses zum Behälter entspricht,
- Figur 4: eine Seitenansicht zu Figur 3, jedoch bei entferntem Deckel bezüglich des ersten Arms und
- Figur 5: die Stütze gemäß Figur 4 bei einer Stellung der Arme der Stütze zueinander, die der Schließposition des Verschlusses im Verhältnis zum Behälter entspricht.

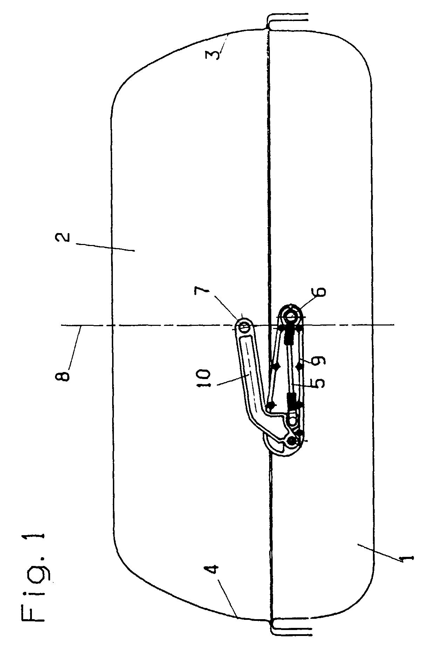

Aus Figur 1 ist der Behälter 1 mit dem in Schließposition befindlichen Verschluß 2 ersichtlich. Der Behälter 1 ist ein Dachkoffer für ein Kraftfahrzeug, um zusätzliches, zu transportierendes Gut aufzunehmen.

Die beiden Seitenkanten sind mit 3 bzw. 4 bezeichnet und stellen die Kanten da, an denen der Verschluß 2 mit dem Behälter 1 über Scharniere verbunden ist, die jedoch so gestaltet sind, daß die jeweils einer Kante 3 oder 4 zugeordneten Scharniere geschlossen und die der anderen zugehörigen geöffnet sind. Der Verschluß 2 ist im Verhältnis zum Behälter 1 durch eine Stütze 5 in der Schließposition oder Offenposition gehalten. Die Stütze 5 ist über ein Schwenklager 6 mit dem Behälter 1 und über das Schwenklager 7 mit dem Verschluß 2 schwenkbar verbunden. Das Zentrum der beiden Schwenklager 6,7 ist jeweils auf der Mittellinie 8 (bei Schließposition) angeordnet. Die Mittellinie 8 befindet sich auf halbem Abstand zwischen den beiden Seitenkanten 3, 4 bzw. deren Scharnierachsen. Die Stütze 5 besteht aus zwei Armen 9,10. Der erste Arm 9 ist über das Schwenklager 6 mit dem Behälter 1 und der zweite Arm 10 ist über das Schwenklager 7 mit dem Verschluß 2 verbunden. In der dargestellten Schließstellung befinden sich die beiden Schwenklager 6,7 in einer zueinander angenäherten Position.

Wird beispielsweise der Verschluß 2 um die Scharnierachse der Seitenkante 3 vom Behälter 1 weg im rechtsdrehenden Sinne nach oben verschwenkt, so wird auch gleichzeitig der Winkel zwischen den beiden Armen 9,10 vergrößert und die beiden Schwenklager 6,7 nehmen in ihrer der Offenposition des Verschlusses 2 entsprechenden Stellung einen größtmöglichen Abstand voneinander ein.

Alternativ ist auch der Verschluß 2 entsprechend der gestrichelten Darstellung im linksschwenkenden Sinne vom Behälter 1 weg verschwenkbar. Entsprechend entfernen sich auch die Schwenklager 6,7 voneinander. Die Anordnung der Schwenklager 6,7 auf der Mittellinie 8 erlaubt eine solche beidseitige Verschwenkungsmöglichkeit.

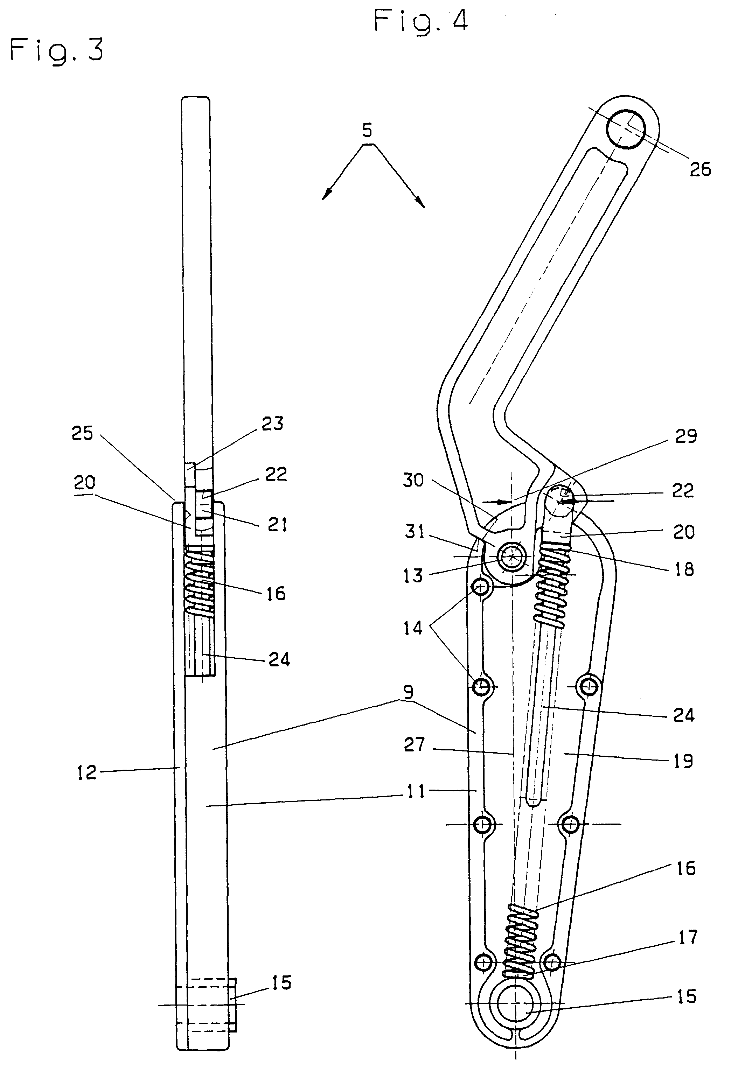

Aus den Figuren 3 bis 5 ist die Stütze 5 mit ihren Einzelteilen ersichtlich.

Es ist erkennbar, daß die Stütze 5 aus dem ersten Arm 9 und dem zweiten Arm 10 besteht. Der zweite Arm 10 ist aus einem Gehäuse 11 und einem Deckel 12 gebildet, welche durch Zapfen 14 miteinander verbunden sind. In dem Hohlraum 19 zwischen Gehäuse 11 und Deckel 12 ist der zweite Arm 10 im dritten Schwenklager 13 gelagert. Dieses umfaßt beispielsweise einen am Gehäuse 11 angeformten Bolzen und eine Bohrung des zweiten Schwenkarmes 10, mit der dieser auf dem Bolzen aufsitzt. Seitlich ist der zweite Arm 10 zwischen dem Gehäuse 11 und dem Deckel 12 geführt. Er ragt durch eine Durchtrittsöffnung 25 aus dem ersten Arm 9 heraus. Der zweite Arm 10 weist eine Lagerbohrung 26 auf, die an seinem dem Schwenklager 13 entfernten Ende angebracht ist und zusammen mit einem Beschlag das Schwenklager 7 bildet. Der erste Arm 9 besitzt an seinem dem dritten Schwenklager 13 abgewandten Ende ebenfalls eine Lagerbohrung 15, die zusammen mit einem entsprechenden Beschlag das Schwenklager 6 bildet.

Die Druckfeder 16 ist mit ihrem ersten Ende 17 an der Außenkontur der die Lagerbohrung 15 umgebenden Wandung des Gehäuses 11 abgestützt. In das zweite Ende 18 der Druckfeder 16 ragt ein Lagerhebel 20 mit einer Führungsstange 24 hinein. Die Druckfeder 16 stützt sich mit ihrem zweiten Ende 18 am Lagerhebel 20 ab. Der Lagerhebel 20 weist einen Lagerbolzen 21 auf, der in einer Lagerbohrung 22 in einer Ausnehmung 23 eines Ansatzes des zweiten Arms 10 aufgenommen ist. Der Lagerbohrung 22 ist exzentrisch zur Schwenkachse des Schwenklagers 13 angeordnet. Der zweite Arm 10 ist mit einem Anschlag 31 versehen, der an einem zweiten Anschlag 30 des Gehäuses 11 zur Anlage kommt, wenn wie in den Figuren 3 und 4 dargestellt, der zweite Arm 10 seine ausgeschwenkte Stellung im Verhältnis zum ersten Arm 9 einnimmt. Der Anschlag 30 begrenzt die Durchtrittsöffnung 25.

Die Verbindungslinie zwischen dem Zentrum der Lagerbohrung 15 des ersten Arms 9 und der Schwenkachse des Schwenklagers 13 ist mit 27 bezeichnet. Die exzentrische Anordnung der Lagerbohrung 22 ist so getroffen, daß in der in den Figuren 3 und 4 dargestellten ausgeschwenkten Position des zweiten Arms 10 im Verhältnis zum ersten Arm 9, welche der Offenstellung des Verschlusses im Verhältnis zum Behälter entspricht, eine Abstützung durch die Druckfeder 16 mit einem wirksamen Hebelarm erfolgt,
der eine Exzentrizität 29 aufweist. Diese ist so bemessen, daß das Gewicht des Verschlusses in dem geforderten Maße abgestützt wird.

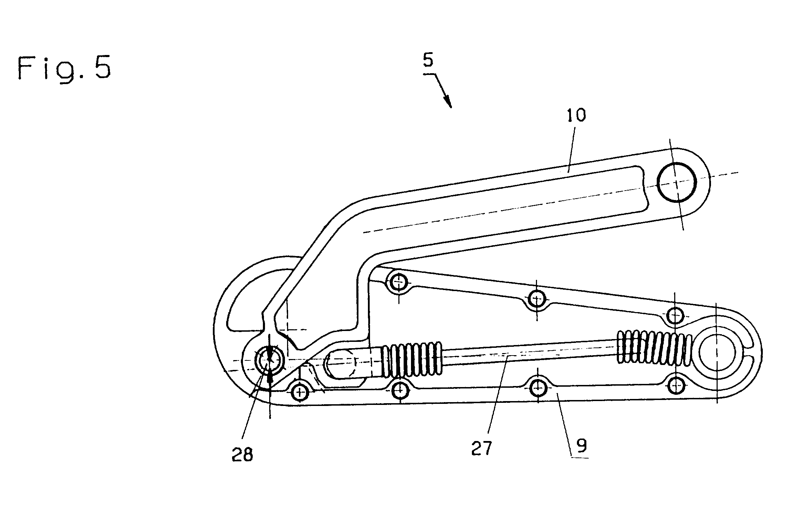

Wird nun der zweite Arm 10 im rechtsschwenkenden Sinne um das Schwenklager 13 auf den ersten Arm 9 zu verschwenkt, so ergibt sich eine Endposition, die der in Figur 5 ersichtlichen Stellung entspricht.

Dabei schwenkt auch die Bohrung mit dem von ihr aufgenommen Lagerbolzen 21 des Lagerhebels 20 und damit der Abstützpunkt der Druckfeder 16 am zweiten Arm 10 um die Achse des dritten Schwenklagers 13 über den Totpunkt, der durch die Verbindungslinie 27 dargestellt ist, hinaus auf die Endstellung mit der Exzentrizität 28. Diese ist so bestimmt, daß eine genügende Schließkraft des Verschlusses auf dem Behälter erzielt wird. Es ist also erkennbar, daß die stellungsabhängige Abstützung in Form der Druckfeder 16 Wirkungslinien hat, die exzentrisch im Verhältnis zum Schwenklager 13 wirksam sind und zu unterschiedlichen Seiten von der Verbindungslinie 27 versetzt sind.

### Bezugszeichenliste

- 1: Behälter
- 2: Verschluß
- 3,4: Seitenkante
- 5: Stütze
- 6: erstes Schwenklager
- 7: zweites Schwenklager
- 8: Mittellinie
- 9: erster Arm
- 10: zweiter Arm
- 11: Gehäuse
- 12: Deckel
- 13: drittes Schwenklager
- 14: Zapfen
- 15: Lagerbohrung des ersten Arms
- 16: Druckfeder
- 17: erstes Ende
- 18: zweites Ende
- 19: Hohlraum
- 20: Lagerhebel
- 21: Lagerbolzen
- 22: Lagerbohrung
- 23: Ausnehmung
- 24: Führungsstange
- 25: Durchtrittsöffnung
- 26: Lagerbohrung im zweiten Arm
- 27: Verbindungslinie
- 28: Exzentrizität
- 29: Exzentrizität
- 30,31: Anschlag

## Patentansprüche

1. Stütze (5) zum Halten eines Verschlußelementes (2), insbesondere einer Klappe oder eines Deckels, im Verhältnis zu einem damit zu verschließenden Behälter (1) in einer Schließstellung oder einer Offenstellung, mit einem ersten und einem zweiten Arm (9,10), wobei einer (9) der Arme (9,10) mit dem Eehälter (1) durch ein erstes und der andere Arm (10) mit dem Verschluß (2) durch ein zweites Schwenklager (6,7) verbindbar ist und die beiden Arme (9,10) durch ein drittes Schwenklager (13) miteinander verbunden sind und durch eine zwischen ihnen wirksame Feder (16) in einer der Schließstellung entsprechenden Stellung ihrer Arme (9,10), bei der die Schwenklager (6,7) einander angenähert sind oder in einer der Offenstellung entsprechenden Stellung ihrer Arme (9,10), bei der die Schwenklager (6,7) voneinander entfernt sind, gegeneinander abgestützt sind, wobei die Feder (16) mit einem Ende (17) am ersten Arm (9) und mit ihrem anderen Ende (18) am zweiten Arm (10) exzentrisch zum dritten Schwenklager (13), das die beiden Arme (9,10) verbindet, angreift und wobei ferner der Angriffspunkt (18) der Feder (16) am zweiten Arm (10) in der der Offenstellung entsprechenden Stellung der Arme (9,10) von der Verbindungslinie (27) zwischen dem Mittelpunkt des ersten Schwenklagers (6) am ersten Arm (9) durch das dritte Schwenklager (13) zwischen beiden Armen (9,10) zu einer Seite und in der Schließstellung zur anderen Seite von der Verbindungslinie (27) versetzt ist,
dadurch gekennzeichnet,
daß der erste Arm (9) als geschlossenes Gehäuse (11) mit einem Hohlraum (19) und mit einer Durchtrittsöffnung (25) für den zweiten Arm (10) ausgebildet ist,
daß der zweite Arm (10) in dem Hohlraum (19) im dritten Schwenklager (13) gelagert und im Hohlraum (19) seitlich geführt ist und
daß die Feder als Druckfeder (16) ausgebildet, im Hohlraum (19) aufgenommen und mit ihren Enden an den beiden Armen (9,10) abgestützt ist.

2. Stütze nach Anspruch 1,
dadurch gekennzeichnet,
daß die Stellung der Arme (9,10) zueinander in ihrer der Offenstellung entsprechenden Position durch Anschläge (30,31) begrenzt ist.

3. Stütze nach Anspruch 2,
dadurch gekennzeichnet,
daß die Exzentrizität (28) und damit der wirksame Hebelarm der Druckfeder (16), bezogen auf die Verbindungslinie (27), in der der Schließstellung entsprechenden Stellung der Arme (9,10) und die Federcharakteristik der Druckfeder (16) nach der gewünschten Schließkraft ausgelegt sind.

4. Stütze nach Anspruch 1,
dadurch gekennzeichnet,
daß die Exzentrität (29) und damit der wirksame Hebelarm der Druckfeder (16), bezogen auf die Verbindungslinie (27), in der der Offenstellung entsprechenden Stellung der Arme (9,10) und die Federcharakteristik der Druckfeder (16) nach der erforderlichen Stützkraft für den Verschluß (2) ausgelegt sind.

5. Stütze nach einem der Ansprüche 1 bis 4,
dadurch gekennzeichnet,
daß das Gehäuse (11) durch einen Deckel (12) verschlossen ist und der zweite Arm (10) zwischen Gehäuse (11) und Deckel (12) seitlich geführt ist.

6. Stütze nach einem der Ansprüche 1 bis 5,
dadurch gekennzeichnet,
daß die Druckfeder (16) auf einer Führungsstange (24) aufgenommen ist, welche mit einem Lagerhebel (20) versehen ist.

7. Stütze nach Anspruch 6,
dadurch gekennzeichnet,
daß der Lagerhebel (20) zusammen mit einer Lagerbohrung (22) des zweiten Arms (10) die Abstützung für die Druckfeder (16) am zweiten Arm (10) bildet.

8. Stütze nach einem der Ansprüche 1 bis 5,
dadurch gekennzeichnet,
daß die beiden Arme (9,10) aus Kunststoff, insbesondere Acetalhomopolymerisat (POM) hergestellt sind.

9. Stütze nach einem der Ansprüche 1 bis 8,
gekennzeichnet
durch die Anordnung an einem Behälter (1) mit einem Verschluß (2), der wahlweise um die eine oder die andere von zwei zueinander parallelen Seitenkanten (3,4) verschwenkbar ist, wobei das Schwenklager (6) des ersten Arms (9) am Behälter (1) und das Schwenklager (7) des zweiten Arms (10) am Verschluß (2) jeweils mittig zwischen den beiden Seitenkanten (3,4) am Behälter (1) bzw. Verschluß (2) angelenkt sind.

## Claims

1. A support (5) for holding a closing element (2), especially a flap or lid, relative to a container (1) to be closed thereby in a closed position or open position, having a first and a second arm (9, 10), with one (9) of the arms (9, 10) being connectable to the container (1) by a first pivot bearing (6) and the other arm (10) being connectable to the closing element (2) by a second pivot bearing (7) and with the two arms (9, 10) being connected to one another by a third pivot bearing (13) and being supported relative to one another by a spring (15) acting therebetween in a position of the arms (9, 10) which corresponds to the closed position wherein the pivot bearings (6, 7) approach one another or a position of the arms (9, 10) which corresponds to the open position wherein the pivot bearings (6, 7) are remote from one another, with the spring (16), by means of one end (17), acting eccentrically on the first arm (9) and, by means of its other end (18), acting eccentrically on the second arm (10) relative to the third pivot bearing (13) connecting the two arms (9, 10), and furthermore, with the contact point (18) of the spring (16) relative to the second arm (10), in the position of the arms (9, 10) corresponding to the open position, being offset from the connecting line (27) between the centre of the first pivot bearing (6) at the first arm (9) through the third pivot bearing (13) between the two arms (9, 10) towards one side and in the closed position towards the other side of the connecting line (27),
characterised in
that the first arm (9) is provided in the form of a closed housing (11) with a cavity (19) and with a through-aperture (25) for the second arm (10); that the second arm (10) is supported in the cavity (19) in the third pivot bearing (13) and laterally guided in the cavity (19); and that the spring provided in the form of a pressure spring (16) is received in the cavity (19) and supported by means of its ends at the two arms (9, 10).

2. A support according to claim 1,
characterised in
that the position of the arms (9, 10) relative to one another, in their position corresponding to the open position, is delimited by stops (30, 31).

3. A support according to claim 2,
characterised in
that the eccentricity (28) and thus the effective lever arm of the pressure spring (16), with reference to the connecting line (27), in the position of the arms (9, 10) corresponding to the closed position, and the spring rate of the pressure spring (16) are calculated to achieve the required closing force.

4. A support according to claim 1,
characterised in
that the eccentricity (19) and thus the effective lever arm of the pressure spring (16), with reference to the connecting line (27), in the position of the arms (9, 10) corrsponding to the open position, and the spring rate of the pressure spring (16) are calculated to achieve the required supporting force for the closing element (2).

5. A support according to any one of claims 1 to 4,
characterised in
that the housing (11) is closed by a cover (12) and that the second arm (10) is laterally guided between the housing (11) and the cover (12).

6. A support according to any one of claims 1 to 5,
characterised in
that the pressure spring (16) is received on a guiding bar (24) which is provided with a bearing lever (20).

7. A support according to claim 6,
characterised in
that the bearing lever (20), together with a bearing bore (22) of the second arm (10), forms the supporting means for the pressure spring (16) at the second arm (10).

8. A support according to any one of claims 1 to 5,
characterised in
that the two arms (9, 10) are made of plastics, especially acetal homopolymer (POM).

9. A support according to any one of claims 1 to 8,
characterised
by being arranged at a container (1) with a closing element (2) which is optionally pivotable around the one or the other of two parallel side edges (3, 4), with the pivot bearing (6) of the first arm (9) being articulated at the container (1) and the pivot bearing (7) of the second arm (10) being articulated at the closing element (2), in each case centrally between the two side edges (3, 4) at the container (1) and the closing element (2) respectively.

## Revendications

1. Etai (5) destiné à retenir un élément de fermeture (2), notamment un abattant ou un couvercle, par rapport à un récipient (1) qui doit être fermé avec celui-ci, dans une position de fermeture ou une position d'ouverture, comprenant un premier bras et un deuxième bras (9, 10), l'un (9) des bras (9, 10) pouvant être relié au récipient (1) par une première articulation et l'autre bras (10) pouvant être relié à l'organe de fermeture (2) par une deuxième articulation (6, 7), et les deux bras (9, 10) étant réunis l'un à l'autre par une troisième articulation (13), et étant maintenus en appui l'un contre l'autre par un ressort (16) agissant entre ces bras, dans une position des bras (9, 10) qui correspond à la position de fermeture, dans laquelle les articulations (6, 7) sont rapprochées l'une de l'autre ou dans une position des bras (9, 10) qui correspond à la position d'ouverture, dans laquelle les articulations (6, 7) sont éloignées l'une de l'autre, le ressort (16) attaquant le premier bras (9) par une extrémité (17) et le deuxième bras (10) par son autre extrémité (18), en un point excentrique par rapport à la troisième articulation (13) qui relie les deux bras (9, 10), et le point d'attaque (18) du ressort (16) sur le deuxième bras (10) étant déporté d'un côté de la ligne de jonction (27) entre le centre de la première articulation (6) sur le premier bras (9) et la troisième articulation (13) entre les deux bras (9, 10) dans la position des bras (9, 10) qui correspond à la position d'ouverture, tandis que, dans la position de fermeture, il est déporté de l'autre côté de cette ligne de jonction (27),
caractérisé en ce que
le premier bras (9) constitue un boîtier fermé (11) présentant une cavité intérieure (19) et une ouverture de traversée (25) pour le deuxième bras (10),
en ce que le deuxième bras (10) est tourillonné sur la troisième articulation (13) dans la cavité (19) et est guidé latéralement dans la cavité (19), et
en ce que le ressort est constitué par un ressort de compression (16), logé dans la cavité (19) et prenant appui sur les deux bras (9, 10) par ses extrémités.

2. Etai selon la revendication 1,
caractérisé
en ce que la position des bras (9, 10) l'un par rapport à l'autre est limitée par des butées (30, 31) dans leur position qui correspond à la position d'ouverture.

3. Etai selon la revendication 2,
caractérisé
en ce que l'excentricité (28), et avec elle la longueur effective du bras de levier du ressort de compression (16), par rapport à la ligne de jonction (27), dans la position des bras (9, 10) qui correspond à la position de fermeture, et la caractéristique élastique du ressort de compression (16), sont calculées en fonction de la force de fermeture souhaitée.

4. Etai selon la revendication 1,
caractérisé
en ce que l'excentricité (29), et avec elle la longueur effective de bras de levier du ressort de compression (16) par rapport à la ligne de jonction (27), dans la position des bras (9, 10) qui correspond à la position d'ouverture, et la caractéristique élastique du ressort de compression (16) sont calculées en fonction de la force d'appui nécessaire pour l'organe de fermeture (2).

5. Etai selon une des revendications 1 à 4,
caractérisé
en ce que le boîtier (11) est fermé par un couvercle (12) et le deuxième bras (10) est guidé latéralement entre le boîtier (11) et le couvercle (12).

6. Etai selon une des revendications 1 à 5,
caractérisé
en ce que le ressort de compression (16) est monté sur une tige de guidage (24) qui est munie d'un levier d'articulation (20).

7. Etai selon la revendication 6,
caractérisé
en ce que le levier d'articulation (20) forme, avec un perçage de portée (22) du deuxième bras (10), la portée qui donne appui au ressort de compression (16) sur le deuxième bras (10).

8. Etai selon une des revendications 1 à 5,
caractérisé ..
en ce que les deux bras (9, 10) sont fabriqués en matière plastique, en particulier en homopolymérisat d'acétal (POM).

9. Etai selon une des revendications 1 à 8,
caractérisé
par son agencement sur un récipient (1) muni d'un organe de fermeture (2) qui peut être basculé au choix autour de l'un ou de l'autre de deux côtés latéraux (3, 4) parallèles entre eux, l'articulation (6) du premier bras (9) sur le récipient (1) et l'articulation (7) du deuxième bras (10) sur l'organe de fermeture (2) étant articulées chacune à mi-distance entre les deux côtés latéraux (3, 4), l'une sur le récipient (1) et l'autre sur l'organe de fermeture (2).
